# EUROPÄISCHE PATENTSCHRIFT

(11) **EP 3 366 487 B1**
(45) Veröffentlichungstag und Bekanntmachung des Hinweises auf die Patenterteilung: **11.11.2020**
(21) Anmeldenummer: 18000179.4
(22) Anmeldetag: 21.02.2018
(51) Int. Cl.: B42D 25/364, B42D 25/351, G02F 1/1334, G02F 1/01

(54) **SICHERHEITSELEMENT MIT PDLC-FOLIE**
SECURITY ELEMENT WITH PDLC FILM
ÉLÉMENT DE SÉCURITÉ POURVU DE FEUILLE PDLC

(30) Priorität: 23.02.2017 DE 102017001768
(43) Veröffentlichungstag der Anmeldung: 29.08.2018
(73) Patentinhaber: Giesecke+Devrient Currency Technology GmbH, 81677 München (DE)
(72) Erfinder: Finkenzeller, Klaus, 85774 Unterföhring (DE); Burchard, Theodor, 83052 Bruckmühl (DE); Keller, Mario, 83358 Seebruck (DE)

(56) Entgegenhaltungen:
- WO-A1-2014/177564
- DE-A1-102007 048 102
- DE-A1-102014 117 877
- DE-B3-102008 020 769

## Beschreibung

Die Erfindung betrifft ein Sicherheitselement zur Absicherung von Wertdokumenten wie beispielsweise Banknoten oder Ausweiskarten, wobei das Sicherheitselement aus einer PDLC-Folie mit dispergierten Tröpfchen aus einem nematischen Flüssigkristall besteht, die sich in einem elektrischen Feld mindestens teilweise in Richtung der Feldlinien ausrichten.

Aus dem Stand der Technik sind Folien aus sogenannten "polymer dispersed liquid crystals (PDLC)" bekannt, bei denen eine Schicht mit in Polymer dispergierten Flüssigkristallen zwischen zwei flächig ausgeführten Elektroden angeordnet ist, wobei die beiden Elektroden auf der Ober- und Unterseite der Schicht angeordnet sind. Durch Anlegen einer elektrischen Spannung an den beiden Elektroden wird die Transluzenz dieser Folien zwischen (optisch) transparent und opak umgeschaltet. Dokument DE102007048102 A1 offenbart ein Sicherheitselement, das aus einer PDLC-Folie mit dispergierten Tröpfchen aus einem nematischen Flüssigkristall besteht, wie in den Oberbegriff des Anspruchs 1 beansprucht.

Herkömmliche PDLC-Folien bestehen aus einer 10 µm bis 25 µm dicken Folie aus Polymer, in die Mikrometer-große Tröpfchen aus einem nematischen Flüssigkristall dispergiert sind. Im ausgeschalteten Zustand, bei dem keine Spannung an die Elektroden angelegt wird, weisen die nematischen Tröpfchen keine bestimmte Orientierung in Bezug auf die Folienebene auf, sie sind somit unregelmäßig zueinander ausgerichtet. Es ergibt sich ein Unterschied zwischen dem Brechungsindex des Polymers und dem mittleren Brechungsindex des Flüssigkristalls, der zu einer Streuung des einfallenden Lichts bzw. einer Trübung der Folie führt. Besonders bevorzugt liegt der Durchmesser der nematischen Tröpfchen im Bereich der Wellenlänge des einfallenden sichtbaren Lichts, denn dann erscheint die Folie nahezu vollständig opak. Im eingeschalteten Zustand, bei dem eine Spannung an die Elektroden angelegt wird, richten sich die nematischen Tröpfchen entlang der Feldlinien des elektrischen Feldes aus, so dass in Richtung der Feldlinien einfallendes Licht nahezu ungeschwächt durch die Folie hindurchtritt und die Folie transparent erscheint. Mit zunehmendem Winkel zwischen dem einfallenden Licht und den Feldlinien bzw. der Ausrichtung der nematischen Tröpfchen nimmt die Lichtstreuung und damit die Trübung bzw. Opazität der Folie zu.

Nachteil der herkömmlichen PDLC-Folien ist die erforderliche hohe Betriebsspannung. Herkömmliche PDLC-Folien benötigen Feldstärken im Bereich von einigen MV/m, um den genannten optischen Effekt zu erzielen. Bei Schichtdicken von 25 µm sind daher einige Zehn Volt Elektrodenspannung notwendig, um über die gesamte Dicke der Schicht eine ausreichende Feldstärke zu erreichen. Bei einem Einsatz von PDLC-Folien in Wertdokumenten, wie beispielsweise Chipkarten oder Banknoten, ggf. noch mit kontaktloser Energieversorgung, sind derart hohe Betriebsspannungen nicht erreichbar.

Es ist deshalb Aufgabe der Erfindung, eine gattungsgemäße PDLC-Folie für den Einsatz als Sicherheitselement in Wertdokumenten derart weiterzubilden, dass die Nachteile des Standes der Technik behoben werden, insbesondere dass eine niedrigere Betriebsspannung und eine preisgünstigere Produktion von PDLC-Folien erreicht werden kann.

Erfindungsgemäß ist die PDLC-Folie auf eine Elektrodenstruktur aufgebracht, die als Interdigitalstruktur aus zwei Elektroden ausgeführt ist, wobei die beiden Elektroden kammartig ausgebildet sind und mit ihren "Kammzinken" fingerartig ineinander greifen, ohne sich dabei zu berühren.

Die PDLC-Folie ist auf den Elektroden und/oder zwischen den einzelnen "Kammzinken" bzw. Fingern der Elektroden angeordnet. Selbstverständlich ist es auch möglich, dass die PDLC-Folie auf beiden Seiten der Elektroden und zwischen den einzelnen "Kammzinken" bzw. Fingern der Elektroden (zwischen den "Fingern" der Elektrodenstruktur ist die elektrische Feldstärke am höchsten) angeordnet ist, so dass die PDLC-Folie die Elektroden teilweise oder vollständig umgibt, so dass die Elektroden quasi im Inneren der PDLC-Folie angeordnet sind.

Der Begriff "Folie" umfasst hierbei insbesondere eine Schicht aus einem polymeren Material, das in fester oder mindestens teilweise flüssiger oder pastöser Form bereitgestellt und auf ein Trägersubstrat oder direkt auf das Substrat eines Wertdokuments aufgebracht wird. Beispielsweise wird das polymere Material auf das Trägersubstrat oder das Substrat des Wertdokuments laminiert, mit einer Klebstoffschicht aufgeklebt oder aufgedruckt. Liegt das polymere Material vor dem Aufbringen in mindestens teilweise flüssiger oder pastöser Form vor, härtet es nach dem Aufbringen auf das Trägersubstrat oder das Substrat des Wertdokuments aus, so dass es wie eine Folie auf dem Trägersubstrat oder dem Substrat des Wertdokuments vorliegt.

Bevorzugt wird die PDLC-Folie zunächst auf ein Trägersubstrat aufgebracht, anschließend auf das Substrat des Wertdokuments transferiert und schließlich das Trägersubstrat wieder entfernt, so dass das Sicherheitselement auf dem Wertdokument kein weiteres Trägersubstrat mehr aufweist.

Ist die Elektrodenstruktur auf einem Trägersubstrat angeordnet, kann der Bereich zwischen bzw. hinter den Fingern durch ein Struktur-formendes Verfahren noch einmal zusätzlich vertieft werden, so dass die PDLC-Folie teilweise auch hinter der Elektrodenstruktur angeordnet ist und der optische Weg vergrößert wird.

Die beiden Elektroden, Anode und Kathode, liegen besonders bevorzugt in einer Ebene, so dass benachbarte "Kammzinken" bzw. Finger der Elektroden den kürzesten Abstand zueinander aufweisen. Dies hat den besonderen Vorteil, dass das Elektrodensystem besonders flach bzw. dünn ausgeführt ist.

Gemäß Anspruch 1 besteht die Elektrodenstruktur aus zwei Elektroden mit jeweils nur einem "Kammzinken", wobei die beiden "Kammzinken" spiralförmig gebogen sind, auf gleicher Ebene liegen, den gleichem Mittelpunkt haben und derart verschränkt sind, dass sich die beiden Windungen nicht berühren. Auch hierbei entsteht das gewünschte Feld zwischen den benachbarten Windungen.

Die jeweiligen "Kammzinken" bzw. Finger können zusätzlich auch einen in Längsrichtung gleichen, unterschiedlichen oder beliebig wechselnden Querschnitt aufweisen.

Erfindungsgemäß vorgesehen ist der Einsatz der Struktur als optisches, interaktives Sicherheitselement in Banknoten, Chipkarten oder zur Produktsicherung. Bei Banknoten kann damit ein "Fenster" erzielt werden, das bei entsprechender elektrischer Ansteuerung seine optische Transluzenz verändert und hierbei insbesondere zwischen transparent und opak wechselt.

Zur elektrischen Ansteuerung ist besonders bevorzugt vorgesehen, die elektrische Spannung einem elektromagnetischen Hochfrequenz-Feld, beispielsweis einem NFC-Leser eines Handys oder einem RFID-Leser, zu entnehmen. Hierzu wird die Hochfrequenz-Spannung, die in eine mit den Elektroden elektrisch verbundene Antennenspule induziert wird, gleichgerichtet und den Elektroden zugeführt.

Eine alternative Spannungsversorgung besteht aus einer Sensortaste, die aus zwei Metallen unterschiedlicher Werte in der Spannungsreihe aufgebaut ist. Bei der Berührung mit einem Finger einer menschlichen Hand entsteht so eine elektrische Spannung, welche bei entsprechend kleiner Struktur der Elektroden, zum Betrieb der erfindungsgemäßen PDLC-Struktur ausreicht.

Selbstverständlich ist auch eine direkte Einspeisung elektrischer Spannung von außen mittels elektrischer bzw. galvanischer Kontakte möglich. Hierbei wird eine elektrische Spannungsversorgung, beispielsweise eine Batterie, mit elektrischen Kabeln mit den Elektroden lösbar verbunden.

Durch entsprechend kleine Abstände zwischen den "Kammzinken" der Elektroden der Interdigitalstruktur können ausreichend hohe Feldstärken zum Ansteuern der Flüssigkristalle erreicht werden. Wird beispielsweise bei einer herkömmlichen PDLC-Folie aus dem Stand der Technik mit 25 µm Schichtdicke und damit 25 µm Elektrodenabstand eine typische Betriebsspannung von 30 V benötigt, so wird bei dem erfindungsgemäßen Aufbau der Elektrodenstruktur als Interdigitalstruktur bei einem Abstand von beispielsweise 2,5 µm zwischen zwei benachbarten "Kammzinken" eine Betriebsspannung im Bereich von lediglich etwa 3 V benötigt.

Der Abstand zwischen zwei benachbarten "Kammzinken" der Elektroden kann hierbei in Längsrichtung konstant sein, so dass die "Kammzinken" parallel zueinander liegen. Dies hat den Vorteil, dass die PDLC-Folie beim Einschalten der elektrischen Spannung überall gleichzeitig ihre Transluzenz ändert.

Der Abstand benachbarter "Kammzinken" der Elektroden kann jedoch auch variieren, so dass der Abstand der "Kammzinken" in Längs- und/oder Querrichtung variiert. In Längsrichtung bedeutet hierbei, dass der Abstand von zwei benachbarten "Kammzinken" an einer Stelle geringer ist, als an einer anderen Stelle. In Querrichtung bedeutet, dass zwei benachbarte "Kammzinken" überall den gleichen Abstand zueinander aufweisen, zu dem nächst folgenden benachbarten "Kammzinken" jedoch einen anderen Abstand aufweisen. Ein variierender Abstand benachbarter "Kammzinken" hat den Vorteil, dass die PDLC-Folie beim Einschalten der elektrischen Spannung an den Stellen zuerst ihre Transluzenz ändert, an denen der Abstand der "Kammzinken" am geringsten ist und sich die Änderung der Transluzenz dann fortlaufend mit zunehmendem Abstand der "Kammzinken" über die PDLC-Folie ausbreitet. Es ergibt sich somit eine Art Bewegungseffekt, bei dem die Änderung der Transluzenz über die PDLC-Folie wandert.

Transluzenz im Sinne dieser Erfindung bedeutet, dass ein Objekt, wie die PDLC-Folie, auftreffendes Licht in einem bestimmten Anteil hindurchtreten lässt. Trifft Licht auf eine Seite des Objekts auf, wird ein bestimmter Anteil des Lichtes bis zu der anderen Seite des Objekts hindurch gelassen und tritt dort wieder aus. Je größer der prozentuale Anteil des hindurchtretenden Lichtes bezogen auf das auftreffende Licht ist, desto transluzenter ist das Objekt. Liegt der prozentuale Anteil bei mindestens 90 %, d.h. lässt das Objekt das auftreffende Licht wie bei einem Fenster nahezu ungeschwächt hindurchtreten, wird das Objekt als transparent bezeichnet. Ein Objekt hingegen, das weniger als 10 % und bevorzugt etwa 0 % des auftreffenden Lichtes hindurchtreten lässt, d.h. bei dem der Anteil des hindurchtretenden Lichtes bezogen auf das auftreffende Licht gering oder nahe oder gleich Null ist, wird als opak oder als nicht lichtdurchlässig bezeichnet.

Durchsicht liegt vor, wenn die Beleuchtung des Substrats von der einen Seite und die Betrachtung von der anderen Seite erfolgt. Aufsicht liegt vor, wenn die Beleuchtung und Betrachtung von der selben Seite des Substrats aus erfolgt.

Wertdokumente, in denen eine derartige PDLC-Folie verwendet werden kann, sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Karten, wie beispielsweise Kredit- oder Debitkarten, deren Kartenkörper mindestens eine Lage eines Sicherheitspapiers aufweist und auch Produktsicherungselemente, wie Etiketten, Siegel, Verpackungen und dergleichen.

Die vereinfachte Benennung Wertdokument schließt alle oben genannten Materialien, Dokumente und Produktsicherungsmittel ein.

Die Begriffe "Vorderseite" oder "Rückseite" der Folie oder des Wertdokuments sind relative Begriffe, die auch als "die eine" und "die gegenüberliegende" Seite bezeichnet werden können und die den überwiegenden Anteil der Gesamtoberfläche der Folie bilden. Ausdrücklich nicht umfasst mit diesen Begriffen sind die Seitenflächen einer Folie oder eines Wertdokuments, die bei einer Dicke einer Folie oder eines Wertdokuments, die bei Kartenkörpern nur etwa einen Millimeter oder bei Banknoten nur Bruchteile eines Millimeters beträgt, verschwindend gering sind und üblicherweise nicht mit Sicherheitselementen oder Beschichtungen versehen werden bzw. werden können. Insbesondere können mit den Seitenflächen auch keine Durchsichtseffekte erzielt werden.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wieder. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:
- Fig. 1: in Seitenansicht eine PDLC-Folie zwischen zwei Elektroden, wie sie aus dem Stand der Technik bekannt ist und hierbei in Fig. 1a im ausgeschalteten Zustand und in Fig. 1b im eingeschalteten Zustand,
- Fig. 2: eine PDLC-Folie auf einem Elektrodensystem in Form einer Interdigitalstruktur in Draufsicht,
- Fig. 3: die PDLC-Folie mit dem Elektrodensystem aus Fig. 2 in Seitenansicht,
- Fig. 4: eine erfindungsgemäße Interdigitalstruktur in Draufsicht, die aus zwei spiralförmigen Elektroden besteht, die ineinander verschachtelt sind.

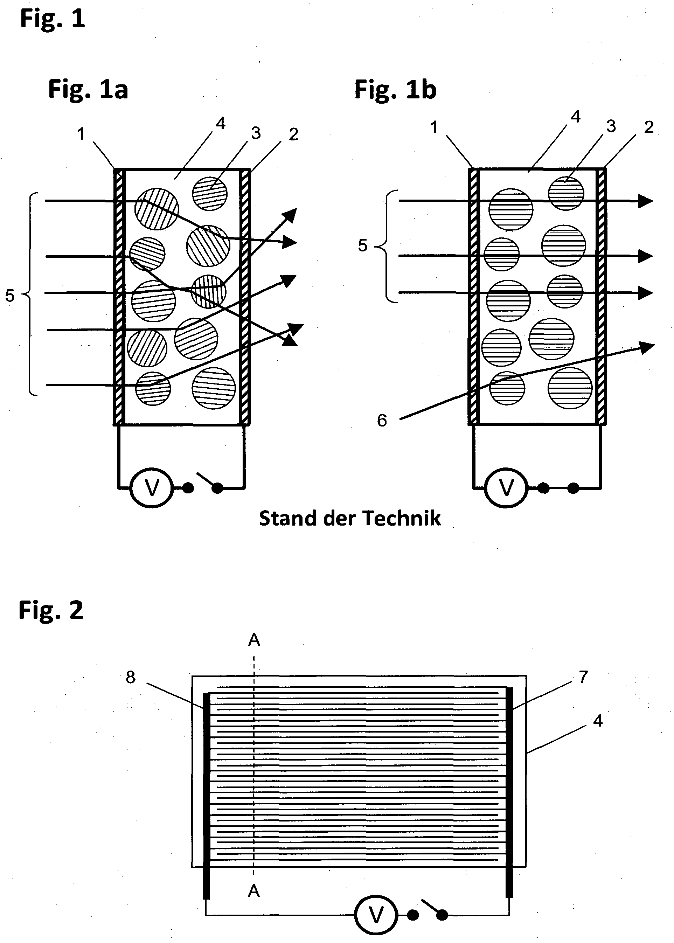

Fig. 1 zeigt in Seitenansicht schematisch eine aus dem Stand der Technik bekannte PDLC-Folie aus einer Polymerschicht 4, in die Tröpfchen 3 aus einem nematischen Flüssigkristall dispergiert sind. Die PDLC-Folie ist zwischen zwei flächigen Elektroden 1 und 2 angeordnet, an die eine elektrische Spannung V angelegt werden kann. Fig. 1a zeigt den ausgeschalteten Zustand und Fig. 1b den eingeschalteten Zustand. Im ausgeschalteten Zustand gemäß Fig. 1a sind die Tröpfchen 3 aus einem nematischen Flüssigkristall unregelmäßig zueinander ausgerichtet, so dass senkrecht auf die PDLC-Folie einfallendes Licht 5 durch die Tröpfchen 3 in verschiedene Richtungen abgelenkt wird, so dass die PDLC-Folie für einen Betrachter in Durchsicht opak erscheint. Im eingeschalteten Zustand gemäß Fig. 1b richten sich die Tröpfchen 3 parallel zu den Feldlinien des elektrischen Feldes aus, so dass senkrecht auf die PDLC-Folie einfallendes Licht 5 durch die Tröpfchen 3 nicht abgelenkt wird, so dass die PDLC-Folie für einen Betrachter in Durchsicht transparent erscheint. In einem schrägen Winkel einfallendes Licht 6, wird hingegen durch die Tröpfchen 3 abgelenkt, so dass die Transluzenz der PDLC-Folie mit gegenüber der Senkrechten zunehmendem Einfallswinkel abnimmt.

Durch Anlegen einer elektrischen Spannung an den beiden Elektroden wird die Transluzenz der PDLC-Folien somit zwischen (optisch) transparent und opak umgeschaltet.

Fig. 2 zeigt in Draufsicht eine PDLC-Folie mit der Polymerschicht 4 auf einem nicht beanspruchten Elektrodensystem in Form einer Interdigitalstruktur aus zwei Elektroden 7 und 8. Die beiden Elektroden 7 und 8 sind hierbei jeweils kammartig ausgeformt und greifen mit ihren "Kammzinken" fingerartig ineinander, ohne sich dabei zu berühren. Die einzelnen "Kammzinken" sind in diesem Ausführungsbeispiel parallel zueinander ausgerichtet und geradlinig und ohne Variation des Querschnitts in Längsrichtung ausgeformt.

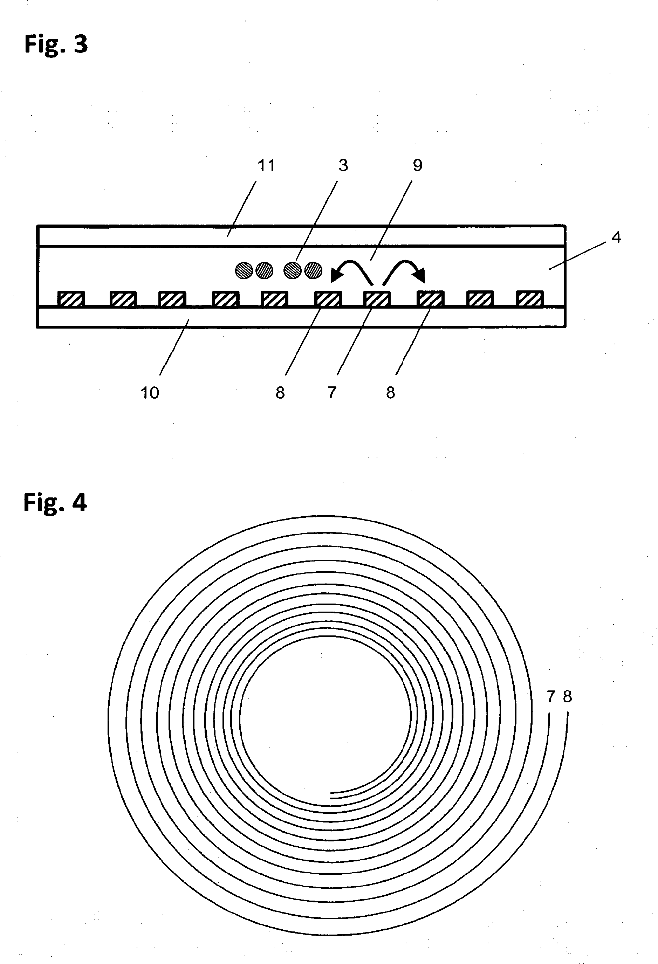

Fig. 3 zeigt die PDLC-Folie mit dem Elektrodensystem aus Fig. 2 in Seitenansicht entlang der Schnittebene A-A. Die Polymerschicht 4, in die exemplarisch einige Tröpfchen 3 eingezeichnet sind, ist auf einer Trägerschicht 10 angeordnet und an ihrer Oberseite mit einer Deck- oder Schutzschicht 11 versehen. Auf der Trägerschicht 10 sind auch die fingerartig nebeneinanderliegenden Elektroden 7 und 8 angeordnet. Im eingeschalteten Zustand bildet sich zwischen den Elektroden 7 und 8 ein elektrisches Feld mit Feldlinien 9 aus, wobei sich die Tröpfchen 3 entlang der Feldlinien 9 ausrichten.

Fig. 4 zeigt in Draufsicht ein Ausführungsbeispiel für eine erfindungsgemäße Interdigitalstruktur, die aus zwei spiralförmigen Elektroden 7 und 8 besteht, die ineinander verschachtelt sind. Die beiden Elektroden 7 und 8 liegen hierbei auf gleicher Ebene, haben den gleichem Mittelpunkt und sind derart verschränkt, dass sich die beiden Windungen nicht berühren.

## Patentansprüche

1. Sicherheitselement zur Absicherung von Wertdokumenten wie beispielsweise Banknoten oder Ausweiskarten, wobei das Sicherheitselement aus einer PDLC-Folie mit dispergierten Tröpfchen aus einem nematischen Flüssigkristall besteht, die sich in einem elektrischen Feld mindestens teilweise in Richtung der Feldlinien ausrichten, wobei die PDLC-Folie auf eine Elektrodenstruktur aufgebracht ist, die als Interdigitalstruktur aus zwei Elektroden ausgeführt ist, wobei die beiden Elektroden kammartig ausgebildet sind und mit ihren "Kammzinken" fingerartig ineinander greifen, ohne sich dabei zu berühren, **dadurch gekennzeichnet, dass** die Elektrodenstruktur aus zwei Elektroden mit jeweils nur einem "Kammzinken" besteht, wobei die beiden "Kammzinken" spiralförmig gebogen sind, auf gleicher Ebene liegen, den gleichem Mittelpunkt haben und derart verschränkt sind, dass sich die beiden Windungen nicht berühren.

2. Sicherheitselement nach Anspruch 1, **dadurch gekennzeichnet, dass** die PDLC-Folie auf beiden Seiten der Elektroden und zwischen den einzelnen "Kammzinken" bzw. Fingern der Elektroden angeordnet ist, so dass die PDLC-Folie die Elektroden teilweise oder vollständig umgibt.

3. Sicherheitselement nach mindestens einem der vorigen Ansprüche, **dadurch gekennzeichnet, dass** die beiden Elektroden in einer Ebene liegen, so dass benachbarte "Kammzinken" bzw. Finger der Elektroden den kürzesten Abstand zueinander aufweisen.

4. Sicherheitselement nach mindestens einem der vorigen Ansprüche, **dadurch gekennzeichnet, dass** die beiden Elektroden mit einer Antennenspule verbunden sind und die elektrische Spannung zur Ansteuerung der Elektroden mit einem elektromagnetischen Hochfrequenz-Feld in die Antennenspule induziert wird.

## Claims

1. Security element for securing valuable documents such as banknotes or identity cards, wherein the security element consists of a PDLC film with dispersed drops from a nematic liquid crystal that align in an electric field at least in part in the direction of the field lines, wherein the PDLC film is applied on an electrode structure designed as an interdigital structure made from two electrodes, wherein the two electrodes are embodied in a comb-type manner and engage in one another by their "comb teeth" like fingers without touching one another, **characterized in that** the electrode structure consists of two electrodes with in each case only one "comb tooth", wherein the two "comb teeth" are bent in the manner of a spiral, are situated in the same plane, have the same central point and are interleaved such that the two windings do not touch.

2. Security element according to Claim 1, **characterized in that** the PDLC film is arranged on both sides of the electrodes and is arranged between the individual "comb teeth" or fingers of the electrodes with the result that the PDLC film partially or completely surrounds the electrodes.

3. Security element according to at least one of the preceding claims, **characterized in that** the two electrodes lie in one plane such that adjacent "comb teeth" or fingers of the electrodes have the shortest distance from one another.

4. Security element according to at least one of the preceding claims, **characterized in that** the two electrodes are connected to an antenna coil and the voltage is induced in the antenna coil for controlling the electrodes with an electromagnetic radio-frequency field.

## Revendications

1. Élément de sécurité pour la protection de documents de valeur tels que par exemple des billets de banque ou des cartes d'identité, l'élément de sécurité étant constitué par une feuille de PDLC contenant des gouttelettes dispersées d'un cristal liquide nématique, qui s'orientent au moins partiellement dans la direction des lignes de champ dans un champ électrique, la feuille de PDLC étant appliquée sur une structure d'électrode, qui est réalisée sous la forme d'une structure interdigitale de deux électrodes, les deux électrodes étant configurées sous la forme d'un peigne et étant imbriquées l'une dans l'autre avec leurs « dents de peigne » à la manière de doigts, sans se toucher, **caractérisé en ce que** la structure d'électrode est constituée par deux électrodes ayant chacune uniquement une « dent de peigne », les deux « dents de peigne » étant courbées en forme de spirale, étant situées sur un même plan, ayant le même point central et étant intriquées de telle sorte que les deux enroulements ne se touchent pas.

2. Élément de sécurité selon la revendication 1, **caractérisé en ce que** la feuille de PDLC est agencée sur les deux côtés des électrodes et entre les « dents de peigne » ou doigts individuels des électrodes, de telle sorte que la feuille de PDLC entoure partiellement ou entièrement les électrodes.

3. Élément de sécurité selon au moins l'une quelconque des revendications précédentes, **caractérisé en ce que** les deux électrodes sont situées dans un plan, de telle sorte que des « dents de peigne » ou doigts voisins des électrodes présentent l'écart le plus court entre eux.

4. Élément de sécurité selon au moins l'une quelconque des revendications précédentes, **caractérisé en ce que** les deux électrodes sont reliées avec une bobine d'antenne et la tension électrique pour le contrôle des électrodes est induit avec un champ électromagnétique haute fréquence dans la bobine d'antenne.
